# EUROPEAN PATENT SPECIFICATION

(11) **EP 1 722 328 B1**
(45) Date of publication and mention of the grant of the patent: **20.09.2017**
(21) Application number: 05103882.6
(22) Date of filing: 10.05.2005
(51) Int. Cl.: G06T 3/40

(54) **Method for improved visual inspection of a size-reduced digital image**
Verfahrung für verbesserte Sichtkontrolle eines Größe-verringerten digitalisierten Bildes
Méthode pour l'inspection visuelle améliorée d'une image numérique taille-réduite

(43) Date of publication of application: 15.11.2006
(73) Proprietor: Agfa HealthCare, 2640 Mortsel (BE)
(72) Inventor: Cresens, Marc, 2640 Mortsel (BE)
(74) Representative: Theunis, Patrick

(56) References cited:
- EP-A- 1 052 598
- EP-A- 1 154 378
- EP-A- 1 465 107
- US-A1- 2003 218 620

## Description

### FIELD OF THE INVENTION

The present invention relates to a method for improved visual inspection of a digital image. More specifically the invention is related to a method for reducing the size of a digital image for improved visual inspection.

### BACKGROUND OF THE INVENTION

Digital imaging systems are becoming increasingly widespread for producing digital data that can be reconstructed into for example useful radiographic images. In one application of a digital imaging system, radiation from a source is directed toward a subject, typically a patient in a medical diagnostic application, and a portion of the radiation passes through the subject and impacts a detector upon. Upon stimulation by means of light of an appropriate wavelength, the surface of the detector converts the radiation to light photons, which are sensed. In case of computed radiography (CR) the detectors are phosphor screens which can show artifacts such as pits, scratches, cracks, stains, sensitivity variation, dose-response irregularities, etc. In case of one or two dimensional direct radiography (DR) the detector is divided into arrays of independent, solid -state detector elements, and encodes output signals based upon the quantity or intensity of the radiation impacting each detector element. The occurrence of defective response of a single detector element or a set of clustered detector elements or associated driver elements can cause single pixel image artifacts or row- or column-wise line artifacts. The presence of artifacts in the reconstructed images can lead to misinterpretation by the physician. So it is important to regularly check the quality of the detectors. Therefor the detectors are uniformly exposed to X-rays and the reconstructed images are visually inspected for artifact occurrence.

However, visual inspection for artifact occurrence in CR or DR detected images is often time consuming obstructing an efficient workflow. The size of the inspection window matrix on the workstation is often too small to fit the entire detected image. Because of the display-matrix limitations, the even smaller surface-fraction for the inspection window and the vastness of the original image matrix, the original image is sliced into a set of adjacent tile-images prior to artifact inspection at pixel-level. For example a size 35 x 43 cm CR-detector screen scanned at 100 micron pixel resolution generates a 3,5 K x 4,3 K (15 Mega pixel) image. At least twenty different 1K x 1K (1 Mpixel) tile-images would be required for inspection to cover all the information present in the original image.

To overcome this problem the original image can be converted into a smaller image fitting into the inspection window using conventional downsizing techniques such as sub-sampling or interpolation.

Sub-sampling is a technique that either replicates (copies) or skips row- and column-data in a repetitive way while creating the downsized output image. Since raw image data is passed unattenuated, sub-sampling preserves the amplitude of fine details. However not all possibly interesting information is transferred with certainty to the smaller output image. Most of the original image content is inevitably lost by the process-inherent pixel-data skipping. Output image signaling of the finest detail occurrence in the original image is only supported if the pixel replication point coincides with the fine detail location. Guaranteed transfer of all information relevant for inspection between the original image and the resulting downsized output image is by consequence impossible.

Interpolation is an alternative technique often used for image resizing. Known interpolation techniques are the smoothing average, nearest neighbour, bi-linear, bi-cubic spline and high-resolution cubic spline kernels. Interpolation is a technique that uses spatial convolution of the pixel-data with the interpolation kernel coefficients to obtain a downsized image. Due to this the medium and high spatial frequency components, mainly representing fine image disturbances, are represented with higher attenuation than the lower spatial frequency component after resizing. The attenuation-level depends on the frequency-response curve, mathematically linked to the spatial scope and shape of the convolution kernel-coefficients used. As these kernel-coefficients are different (except for the smoothing average kernel), the attenuation-level also depends on the location of the image-disturbance relative to the interpolation point. Both effects lead to reduced detectability of isolated, medium and high spatial frequency disturbances, present in the original image, after downsizing.

To overcome the above mentioned problems a need exist for an improved workflow to detect artifacts during visual image inspection whereby the original image is converted into an image fitting the inspection window and image overview is preserved. Furthermore there is a need to signal the presence of artifacts with certainty, regardless of their spatial frequency content or image location, such that they can be detected more easily during visual artifact inspection.

US 2003/0218620 discloses a method for displaying an electronic document on a digital handheld device wherein first a reduction ratio equal to the ratio of an original document width to the digital handheld device screen width is calculated. According to the method a reduced document having a size related to the original document by the reduction ratio is generated.

### SUMMARY OF THE INVENTION

The above-mentioned aspects are realised by the method having the specific features set out in claim 1. Specific features for preferred embodiments of the invention are set out in the dependent claims.

Further advantages and embodiments of the present invention will become apparent from the following description and drawings.

### BRIEF DESCRIPTION OF THE DRAWINGS

Fig. 1 shows the transformation of a large input image into a reduced size output image.
Fig. 2 shows the double nested processing flow to convert a large input image into a smaller output image.
Fig.3 shows the size reduction algorithm

### DETAILED DESCRIPTION OF THE INVENTION

According to the method of present invention a large input image oversizing the display window is reduced to a small output image matching the display window for visual artifact inspection employing an image size-reducing algorithm. According to this method low and high spatial frequency disturbances which are sufficiently significant and relevant for visual artifact inspection are transferred with high efficiency for artifact-signaling purposes from the original input image to the downsized output image, presented for compacted full image display. Also the presence of local significant single-pixel disturbances, the smallest possible image disturbances, is signaled in the downsized output image regardless of the size-reduction factors (bi-directional) used and of the location of the disturbance inside the original image.

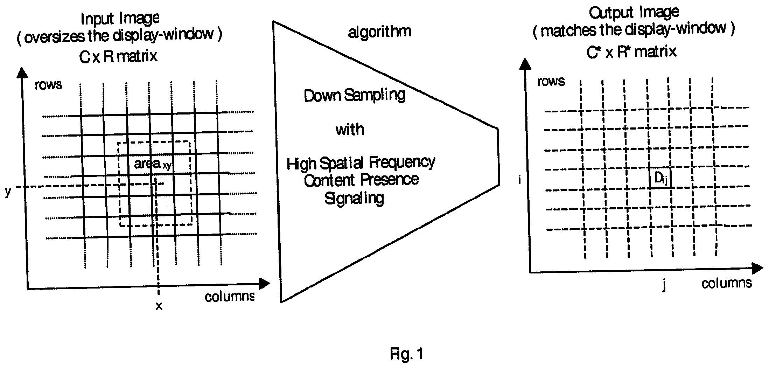

According to the present invention as shown in fig. 1 the image size reducing algorithm transforms a larger input image into a reduced size output image while passing low spatial frequency content in the input image on to the output image and signaling the presence of significant medium and high spatial frequency disturbances with high efficiency and spatial magnification. Down-sampling reduces the total amount of pixels by a factor: C. R / (C*. R*) whereby C and C* represent the number of columns in respectively the input and output image and R and R* represent the number of rows in respectively the input and output image. Each pixel Dᵢⱼ in the size-reduced output image is spatially associated with a given input image area_{xy}. Each output image pixel Dᵢⱼ is calculated by means of an image size reducing algorithm, crunching the pixel data present in area_{xy}, spanning the spatially related input image pixels.

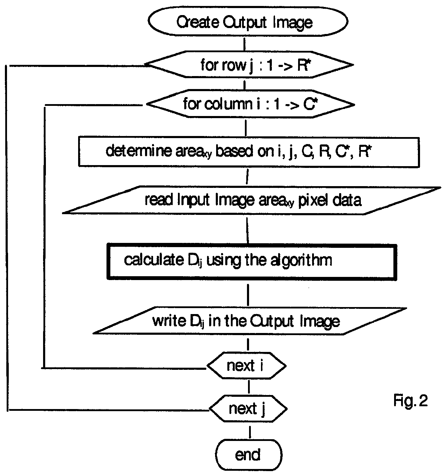

The processing flow according to the present invention to obtain the output image pixel Dᵢⱼ is illustrated in fig. 2. The diagram in fig. 2 shows a double nested loop processing flow required to transform a large input image into a smaller output image. During each passage through the flow diagram's main branch the following operations are sequentially executed to calculate the value of a single output image pixel Dᵢⱼ:
a) the column and row output image indices i and j and the input and output image matrix sizes (C.R and C*.R*) are used to calculate the center-coordinates x and y of the spatially associated input image area selected for conversion. The amount of area pixels, and the area aspect ratio required are determined by the column- and row-wise shrink factors: C/C* and R/R*
b) the selected area pixel coordinates are determined.
c) the area's pixel data are read from the input image.
d) the output pixel data are calculated using the image size-reducing algorithm.
e) the result from the calculation is stored at the selected output image pixel location Dᵢⱼ.
f) the column- and row-indices are updated to address the next output image pixel.

After all output image pixel locations have been addressed accordingly the image size reducing process is stopped.

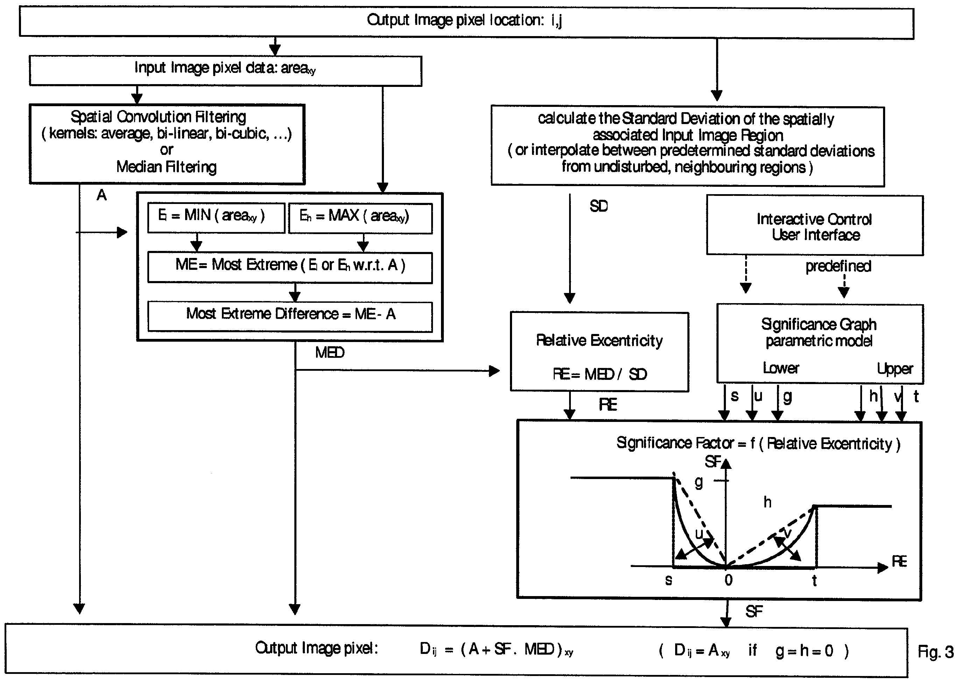

The internal processing of the algorithm that is used according to the method of the present invention to calculate the output image pixel data is shown in detail in fig. 3. Three cascaded processing steps generate the intermediate data required to calculate the output image pixel value Dᵢⱼ.

Generally, the output pixel value Dᵢⱼ is calculated as the sum of a lower spatial frequency filtered component A and a weighed MED (most extreme difference) component, signaling the presence and magnitude of higher spatial frequency content in area_{xy}.

The relative impact of adding the MED component on Dᵢⱼ is controlled by the coupling gain SF (significance factor), expressing the relative significance of the higher spatial frequency detail found with respect to the noise level present in the associated, larger image area_{xy} selected.

The processing steps of the algorithm will now de discussed in more detail. In the first processing step the amount of area_{xy} pixel-data elements is reduced to a single, low pass filtered area value A. This value A acts as a local, lower resolution, background-representation of all the pixel data present in area_{xy} selected for conversion. For this data reduction, statistical order filtering (SOF), also known as median filtering, or spatial convolution filtering is used. For the spatial convolution filtering, known interpolation kernels such as smoothing average, bi-linear and bi-cubic spline can be used but also other kernels showing low pass filter properties can be applied.

The spatial frequency response characteristics of this size reducing process depend on the targeted image size reduction factor C. R / (C*. R*) and on the filtering technique and kernel chosen for conversion.

Offset, the image background, as well as low and medium spatial frequency disturbances are transmitted with high efficiency towards the condensed, low pass filtered area-signal A.

In a second, cascaded processing step the previously calculated value A acts as a reference for comparison with the raw area_{xy} pixel data to find the magnitude and the polarity of the most extreme difference (MED) between any pixel data item located inside area_{xy} and the locally smoothed value A. Therefore area_{xy} is scanned to find the minimum (Eₗ) and the maximum (Eₕ)pixel data locally available. These minimum and maximum values are compared with value A to determine which of both deviates most from A. The most extreme pixel data (ME) is the value which deviates most from A. Finally MED, the most extreme difference is calculated by subtracting A from the most extreme pixel data (ME) detected. This intermediate, single result (MED) is being created from the multitude of raw input image pixel data and denotes image size reduction. The magnitude and the polarity of MED depend on the data content of a single pixel located somewhere within the area_{xy}. Since A is a low spatial frequency filtered representation of all the pixel-data present in area_{xy}, MED is hardly sensitive to the spatial location of the most extreme pixel relative to the area_{xy} boundaries. The combination of both properties assures magnitude and polarity signaling of single pixel image disturbances, regardless of their location inside the selected input image area under conversion.

In absence of significant high frequency image content inside area_{xy}, MED will represent the most extreme local noise pixel data found.

Image size reduction improves the detectability of small input image disturbances since these are, seen from a relative spatial perspective, maximally magnified by the fact that they show up as a full output image pixel, representing several downsized input image pixels.

In a third cascaded process step the relative excentricity RE is obtained by comparing the MED with the standard deviation SD of the image data in the a spatially associated larger region surrounding area_{xy}. This SD is a measure for the local noise-level present in the input image. Also SD can be obtained by interpolation between predetermined standard deviations from undisturbed, neighbouring regions.

The local noise-level normalized MED value RE, is calculated as the ratio: MED / SD. Therefor, high RE values denote a high amount of significant high spatial frequency image content and low RE values denote the presence of only image noise.

In the next step RE is converted into a significance factor SF by means of a predefined and/or user controllable significance graph. This significance graph, centered around the low pass filtered area_{xy} value A (RE = 0, ME=A), determines the level of multiplicative coupling that is assigned to MED during the final calculation of the output pixel Dᵢⱼ.

The significance graph is composed of two center-concatenated conversion graphs, each addressing one polarity of the relative excentricity (RE) axis.

The lower (RE<0) and upper (RE >0) parts of the graph are characterized by means of separate parametric mathematical models, each controlling the RE-range, the SF gain, the shape and the steepness of the compound conversion graph.

The RE range can be controlled by the offset values s and t, the SF gain can be controlled by the clipping levels g and h while the steepness and shape of the graph can be controlled by values u and v.

As a result different transfer behavior can be assigned to higher frequency disturbances depending on whether their pixel values are bigger or smaller than A. The graph's shape can vary from linear over increasingly curved to step-wise discontinuous. Exponential, parabolic, hyperbolic, ellipsoidal as well as some goniometrical mathematical models are suited for parametric graph control. Clipping functionality can also be added as shown in the block diagram.

The RE-ranges: "s to 0" and "0 to t" can be modified to be either big or small and symmetrically or asymmetrically positioned relative to the SF-axis.

Both significance factors clipping levels, g and h, can be either positive or negative and can be either bigger or smaller than unity. A different polarity of g and h enables the conversion of both brighter and darker input image disturbances to either brighter or darker entities in the output image.

The bigger the relative excentricity (higher MED relative to SD, ), the higher the chance that an interesting higher spatial frequency feature, worth inspecting, is present in area_{xy}.

Therefore gradually more significance factor coupling is assigned with increasing RE. This suppresses the disturbing impact of local noise extremities in undisturbed image areas on the reduced size output image whereby improved visualization during output image inspection is obtained.

After determination of A, MED and SF, the output image pixel value can be computed as: Dᵢⱼ = (A + SF . MED)_{xy}.

After all the output image pixels have been calculated, a downsized output image is obtained that can be presented for visual inspection on a single display window. The image is presented in such a way that significant (relative to the local noise-level) low, medium and high spatial frequency image-disturbances, possibly occurring in the larger input image, are signaled with increasing spatial magnification on a smoothed background.

To further improve visual artifact detection, the medium and small image disturbances can be made flashing on top of a steady background. This can be obtained by processing the same input image with two contrasting sets of significance factor graph controls whereby two different reduced size output images can be created that can be stored separately. By toggling between both stored images, presented in the same inspection-window, at a rate optimized for maximum disturbance of the human vision system, the higher spatial frequency features, occurring in the input image, will more easily attract attention during inspection of the output image.

According to a further aspect of the present invention during inspection of the single-window, size-compressed output image the predefined significance factor graph controls (s,u,g,h,v,t) can be overridden by means of easy, interactive changes externally introduced via the user interface. This way the user can determine the shape of the significance graph, the clipping level and the slope/steepness of the significance graph. As a result the user can decide which low, medium or high frequency disturbances occurring in the input image will be signaled in the output image.

## Claims

1. A computer implemented method for generating an output image by reducing the size of an input image, comprising the following steps:
a. Determine for a pixel location (i,j) in said output image a corresponding area_{xy} in said input image,
b. Fetch the pixel values in said input image area_{xy},
c. Calculate an output pixel value Dᵢⱼ for said pixel location (i,j) using a size reducing algorithm,
d. Insert Dᵢⱼ in the output image,
e. Repeat steps a to d for each pixel location (i,j) in said output image,
**characterized in that**:
said value Di,j is obtained by adding to a value A obtained by low pass filtering the pixel values of said input image area, a value obtained by amplifying a value MED which represents the pixel value in said input image area that most deviates from said value A with a significance factor SF, said significance factor being a function of the relative excentricity RE that is obtained as the ratio MED/SD whereby SD is a measure for the local noise-level in the input image and is obtained as the standard deviation of the image data in a spatially associated larger region surrounding area_{x,y}.

2. Method according to claim 1 wherein A is obtained by statistical order filtering or spatial convolution filtering of said input image area pixel values.

3. Method according to claim 1 wherein said MED is obtained by subtracting A from the most extreme pixel data ME that most deviates from A detected in the input image area_{xy}.

4. Method according to claim 1 wherein SD is the standard deviation of the pixel values of the area_{xy} centered input image region.

5. Method according to claim 1 wherein SD is obtained by interpolation between the predetermined standard deviations of undisturbed, neighbouring regions.

6. Method according to claim 1 wherein RE is converted into SF by means of a significance graph, said significance graph determining the amount of multiplicative coupling assigned to pixel value MED when calculating D_{i,j} and wherein said significance graph is predetermined and/or user controllable.

7. Method according to claims 6 wherein said significance graph is composed of two center-concatenated conversion graphs that are **characterized by** separate, parametric mathematical models controlling RE range, SF gain and the steepness of the significance graph.

8. Method according to claims 1 to 7 wherein two output images are created by applying two contrasting sets of significance graph values.

9. Method according to claim 8 wherein said output images are displayed alternating at a preset rate to improve visual inspection.

## Patentansprüche

1. Ein computerimplementiertes Verfahren zur Erzeugung eines Ausgabebildes durch Verringerung der Größe eines Eingabebildes, umfassend die folgenden Schritte:
a. Bestimmen, für eine Pixelstelle (i,j) im besagten Ausgabebild, eines entsprechenden Bereichs_{xy} im Eingabebild,
b. Abrufen der Pixelwerte im genannten Eingabebildbereich_{xy},
c. Berechnung eines Ausgabepixelwerts Dᵢⱼ für die Pixelstelle (i,j) unter Verwendung eines größenverringernden Algorithmus,
d. Einfügen von Dᵢⱼ in das Ausgabebild,
e. Wiederholung der Schritte a bis d für jede Pixelstelle (i,j) im Ausgabebild,
**dadurch gekennzeichnet, dass**
der besagte Wert D_{i,j} erhalten wird, indem zu einem Wert A, der durch Tiefpassfilterung der Pixelwerte des besagten Eingabebildbereichs erhalten wird, ein Wert addiert wird, der durch Verstärkung eines MED-Wertes erhalten wird, der den Pixelwert im besagten Eingabebildbereich, der um einen Signifikanzfaktor SF am meisten vom Wert A abweicht, darstellt, wobei der Signifikanzfaktor Funktion der relativen Exzentrizität RE ist, die als das MED/SD-Verhältnis erhalten wird, wobei SD ein Maß für den örtlichen Rauschpegel im Eingabebild ist und als die Standardabweichung der Bilddaten in einem räumlich assoziierten größeren, Bereich_{x,y} umgebenden Bereich erhalten wird.

2. Verfahren nach Anspruch 1, wobei A durch statistische Folgefilterung oder räumliche Faltungsfilterung der Pixelwerte des Eingabebildbereichs erhalten wird.

3. Verfahren nach Anspruch 1, wobei der MED-Wert erhalten wird, indem A vom extremsten Pixelwert ME, die am meisten vom im Eingabebildbereich_{xy} detektierten A-Wert abweicht, subtrahiert wird.

4. Verfahren nach Anspruch 1, wobei SD die Standardabweichung der Pixelwerte des Bereich_{xy}-zentrierten Eingabebildbereichs ist.

5. Verfahren nach Anspruch 1, wobei SD durch Interpolation zwischen den vorgegebenen Standardabweichungen ungestörter benachbarter Bereiche erhalten wird.

6. Verfahren nach Anspruch 1, wobei RE mittels einer Signifikanzkurve in SF umgewandelt wird, wobei die Signifikanzkurve die Menge multiplikativer Kupplung, die bei der Berechnung von D_{i,j} dem Pixelwert MED zugeordnet ist, bestimmt und wobei die Signifikanzkurve vorgegeben und/oder benutzersteuerbar ist.

7. Verfahren nach Anspruch 6, wobei die Signifikanzkurve aus zwei zentralverketteten Konversionskurven besteht, die durch getrennte parametrische mathematische Modelle, die den RE-Bereich, den SF-Zuwachs und die Steilheit der Signifikanzkurve steuern, gekennzeichnet sind.

8. Verfahen nach den Ansprüchen 1 bis 7, wobei durch Anwendung zweier kontrastierender Sätze von Signifikanzkurvenwerten zwei Ausgabebilder erstellt werden.

9. Verfahren nach Anspruch 8, wobei die Ausgabebilder bei vorgegebener Geschwindigkeit abwechselnd angezeigt werden, um die visuelle Prüfung zu verbessern.

## Revendications

1. Procédé mis en oeuvre par ordinateur pour la génération d'une image de sortie par réduction des dimensions d'une image d'entrée, comprenant les étapes consistant à:
a. déterminer, pour une position de pixel (i,j) dans ladite image de sortie, d'une zone_{xy} correspondante dans ladite image d'entrée,
b. extraire les valeurs de pixel dans ladite zone_{xy} de l'image d'entrée,
c. calculer une valeur de pixel de sortie Dᵢⱼ pour ladite position de pixel (i,j) en appliquant un algorithme de réduction de dimensions,
d. insérer Dᵢⱼ dans l'image de sortie,
e. répéter les étapes a à d pour chaque position de pixel (i,j) dans ladite image de sortie,
**caractérisé en ce que**
ladite valeur D_{i,j} est obtenue en ajoutant à une valeur A obtenue par filtrage passe-bas des valeurs de pixel de ladite zone d'image d'entrée, une valeur obtenue par amplification d'une valeur MED représentant la valeur de pixel dans ladite zone d'image d'entrée qui dévie le plus de ladite valeur A d'un facteur d'importance SF, ledit facteur d'importance étant fonction de l'excentricité relative RE obtenue comme le rapport MED/SD, où SD représente une mesure du niveau de bruit local dans l'image d'entrée et est obtenue comme la déviation standard des données d'image dans une zone plus grande et spatialement associée qui entoure la zone_{x,y}.

2. Procédé selon la revendication 1, **caractérisé en ce que** la valeur A est obtenue par filtrage par séquence statistique ou filtrage par convolution spatiale desdites valeurs de pixel de la zone d'image d'entrée.

3. Procédé selon la revendication 1, **caractérisé en ce que** la valeur MED est obtenue en soustrayant A de la valeur de pixel ME la plus extrême qui dévie le plus de la valeur A détectée dans la zone_{xy} d'image d'entrée.

4. Procédé selon la revendication 1, **caractérisé en ce que** la valeur SD représente la déviation standard des valeurs de pixel de la zone d'image d'entrée centrée par la zone_{xy}.

5. Procédé selon la revendication 1, **caractérisé en ce que** la valeur SD est obtenue par interpolation entre les déviations standard prédéterminées de zones voisines non troublées.

6. Procédé selon la revendication 1, **caractérisé en ce que** la valeur RE est convertie en SF par une courbe d'importance, ladite courbe d'importance déterminant la quantité de couplage multiplicatif assignée à la valeur de pixel MED lors du calcul de la valeur D_{i,j} et ladite courbe d'importance étant prédéterminée et/ou contrôlable par l'utilisateur.

7. Procédé selon la revendication 6, **caractérisé en ce que** ladite courbe d'importance est composée de deux courbes de conversion à concaténation centrale **caractérisées par** des modèles mathématiques paramétriques séparés contrôlant la zone RE, le gain de SF et la pente de la courbe d'importance.

8. Procédé selon les revendications 1 à 7, **caractérisé en ce que** deux images de sortie sont créées en appliquant deux jeux contrastants de valeurs de courbe d'importance.

9. Procédé selon la revendication 8, **caractérisé en ce que** lesdites images de sortie sont affichées en alternance à une vitesse prédéterminée afin d'améliorer l'inspection visuelle.
